## Europäisches Patentamt
## European Patent Office
## Office européen des brevets

(11) Veröffentlichungsnummer: **0 204 087 B1**

(12) # EUROPÄISCHE PATENTSCHRIFT

(45) Veröffentlichungstag der Patentschrift: **11.09.91**

(51) Int. Cl.5: **A21D 13/02**

(21) Anmeldenummer: **86103514.5**

(22) Anmeldetag: **15.03.86**

(54) **Verfahren zum Herstellen eines enzymatisch aufgeschlossenen Vollkornansatzes als Teigzusatz für Vollkornbrot, danach hergestellter Brotteigzusatz sowie dessen Verwendung.**

(30) Priorität: **27.04.85 DE 3515254**

(43) Veröffentlichungstag der Anmeldung:
**10.12.86 Patentblatt 86/50**

(45) Bekanntmachung des Hinweises auf die
Patenterteilung:
**11.09.91 Patentblatt 91/37**

(84) Benannte Vertragsstaaten:
**AT CH DE FR LI NL SE**

(56) Entgegenhaltungen:
**DE-B- 2 851 053**
**DE-C- 531 670**
**DE-C- 902 452**

(73) Patentinhaber: **Hammel, Anton Dieter, Dr.**
**Wolfsgraben 11**
**W-3440 Eschwege(DE)**

(72) Erfinder: **Hammel, Anton Dieter, Dr.**
**Wolfsgraben 11**
**W-3440 Eschwege(DE)**

(74) Vertreter: **Goddar, Heinz J., Dr. et al**
**FORRESTER & BOEHMERT Widenmayerstrasse 4/I**
**W-8000 München 22(DE)**

Rank Xerox (UK) Business Services

## Beschreibung

Die Erfindung betrifft ein Verfahren zum Herstellen von Vollkornbrot unter Verwendung eines enzymatisch aufgeschlossenen Teigzusatzes.

Aus der DE-B-28 51 053 ist es bekannt, den enzymatischen Aufschluß des Getreidekorns durch Ausnutzung der natürlichen Aktivität der Amylasen und Proteasen zum Abbau von Stärke zu Zucker in Anspruch zu nehmen, an den sich ein Extrusionsprozeß anschließt. Die DE-C-531 670 beschreibt ein Verfahren zur enzymatischen Kornaufschließung für Back- und Teigzwecke, bei dem das Korn einer 24stündigen Quellung und einer daran anschließenden mindestens 24stündigen Keimung unterworfen wird. Das zu einem homogenen Teig verarbeitete Korn wird daraufhin unter einem Druck, der bis auf etwa 4,5 Atmosphären ansteigt, etwa 12-14 Stunden fermentiert.

Der Erfindung liegt die Aufgabe zugrunde, ein Verfahren der gattungsgemäßen Art zu schaffen, welches einen Brotteigzusatz ergibt, der zur Verbesserung des Brotgeschmacks und der Brotfrischhaltung von Roggen- bzw. Weizenvollkornbrot führt.

Erfindungsgemäß wird diese Aufgabe dadurch gelöst, daß man als Teigzusatz einen solchen einsetzt, der durch Mischen von keimfähigen Getreidekörnern mit Wasser im Gewichtsverhältnis von etwa 1:1, einen nachfolgenden Keimprozeß bei einer Temperatur zwischen 40°C und 60°C für eine Zeitdauer von mindestens 36 Stunden, währenddessen das Gewichtsverhältnis zwischen Getreidekörnern und Wasser durch Nachgeben von Wasser im wesentlichen konstant gehalten wird, und eine an eine Zerkleinerung anschließende Druckbehandlung mittels Wasserdampfes und einem Überdruck von 0,1 - 5 bar für einen Zeitraum von mindestens 15 Stunden hergestellt worden ist.

Eine besondere Ausführungsform der Erfindung sieht vor, daß der Keimprozeß bei ca. 50°C erfolgt ist.

Weiterhin wird erfindungsgemäß vorgeschlagen, daß die Dauer des Keimprozesses mindestens 48 Stunden betragen hat.

Auch kann vorgesehen sein, daß den gekeimten Getreidekörnern vor Beginn der Druckbehandlung ca. 0,1 Gew.% Zitronensäure oder eine entsprechende Menge Sauerteig, bezogen auf die Trockenmasse der Getreidekörner, zugesetzt worden ist.

Erfindungsgemäß wird weiterhin vorgeschlagen, daß den Getreidekörnern vor dem Keimprozeß Restbrot beigemengt worden ist.

Schließlich sieht die Erfindung noch vor, daß der Teigzusatz einen Anteil von 10 - 15 Gew.% des Brotteigs ausmacht.

Der Erfindung liegt die überraschende Erkenntnis zugrunde, daß sich durch das erfindungsgemäße Verfahren die natürliche, biologisch gebildete Alphaamylase im Getreidekorn durch das Ankeimen anreichern, hierdurch die vorhandene Stärke (also die Glukosepolymeren) abbauen und diese schließlich bei Behandlung unter Druck bei erhöhter Temperatur infolge der Maillard-Reaktion mit Eiweiß verzuckern läßt. Im Roggenvollkornbrot bzw. auch im weizenhaltigen Vollkornbrot führt die Verwendung des so erhaltenen Brotteigzusatzes zur Verbesserung des Geschmacks sowie der Frischhaltung. Wird, wie eine Ausführungsform des erfindungsgemäßen Verfahrens, wie weiter oben dargelegt, vorsieht, dem Gemisch aus Getreidekörnern und Wasser nach der enzymatischen Behandlung Zitronensäure zugesetzt, so verstärkt sich die Dunklungswirkung, wobei allerdings der Süßungsgrad abnimmt. Die Verwendung des erfindungsgemäß hergestellten Brotteigzusatzes führt bei im übrigen herkömmlichem Roggenvollkornteig zu einem Brot mit dunkler Krume, süßem, malzartigem Geschmack sowie verlängerter Brotfrischhaltung.

Nachstehend ist die Erfindung anhand eines Ausführungsbeispieles im einzelnen erläutert.

## Beispiel

Zum enzymatischen, natürlichen Stärkeabbau wurden 20 kg unbeschädigte, ganze Roggenkörner mit 20 1 Wasser gemischt und dann bei 50°C 48 Stunden lang gequollen, wobei laufend Wasser nachgegeben wurde, um das Gewichtsverhältnis von Roggenkörnern zu Wasser im wesentlichen im Bereich von 1 : 1 zu halten. Nach der vorstehenden enzymatischen Behandlung, deren charakteristische Daten (Zeitdauer 48 Stunden, Temperatur 50°C) sich als innerhalb der erfindungsgemäß vorgesehene Bereiche optimal erwiesen haben, wurde die Mischung püriert. Daraufhin wurde das Reaktionsgefäß geschlossen und mit Wasserdampf von 0,1 bar beaufschlagt. Nach einer Reaktionszeit von 20 Stunden wurde der so erhaltene Brotteigzusatz im Verhältnis von 15 Gew.-% unter herkömmlichen Roggen-Vollkornbrotteig geknetet, wobei vorher festgestellt wurde, daß der dunkelbraune Brotteigzusatz malzartig süß schmeckte und sich die Dunkelfärbung noch verstärken ließ, wenn man vor Beginn der Druckbehandlung 0,1 Gew.-% Zitronensäure hinzusetzte, wobei der Geschmack des Brotteigzusatzes dann allerdings nicht mehr so süß war. Das erhaltene Vollkornbrot hatte einen süßlichen, malzartigen Geschmack, eine dunkle Krumenfarbe und zeichnete sich durch längere Frischhaltung aus.

Die in der vorstehenden Beschreibung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

**Patentansprüche**

1. Verfahren zum Herstellen von Vollkornbrot unter Verwendung eines enzymatisch aufgeschlossenen Teigzusatzes, dadurch gekennzeichnet, daß man als Teigzusatz einen solchen einsetzt, der durch Mischen von keimfähigen Getreidekörnern mit Wasser im Gewichtsverhältnis von etwa 1:1, einen nachfolgenden Keimprozeß bei einer Temperatur zwischen 40° C und 60° C für eine Zeitdauer von mindestens 36 Stunden, währenddessen das Gewichtsverhältnis zwischen Getreidekörnern und Wasser durch Nachgeben von Wasser im wesentlichen konstant gehalten wird, und eine an eine Zerkleinerung anschließende Druckbehandlung mittels Wasserdampfes und einem Überdruck von 0,1 bis 5 bar für einen Zeitraum von mindestens 15 Stunden hergestellt worden ist.

2. Verfahren nach Anspruch 1, dadurch gekennzeichnet, daß der Keimprozeß bei ca. 50° C erfolgt ist.

3. Verfahren nach Anspruch 1 oder 2, dadurch gekennzeichnet, daß die Dauer des Keimprozesses mindestens 48 Stunden betragen hat.

4. Verfahren nach einem der varangehenden Ansprüche, dadurch gekennzeichnet, daß den gekeimten Getreidekörnern vor Beginn der Druckbehandlung ca. 0,1 Gewichtsprozente Zitronensäure, oder eine entsprechende Menge Sauerteig, bezogen auf die Trockenmasse der Getreidekörner, zugesetzt worden ist.

5. Verfahren nach einem der vorangehenden Ansprüche, dadurch gekennzeichnet, daß den Getreidekörnern vor dem Keimprozeß Restbrot beigemengt worden ist.

6. Verfahren nach einem der vorangehenden Ansprüche, dadurch gekennzeichnet, daß der Teigzusatz einen Anteil von 10 bis 15 Gewichtsprozenten des Brotteigs ausmacht.

**Claims**

1. A process for the production of wholemeal bread using an enzymatically broken-down dough additive, characterised in that the dough additive used is one which has been prepared by mixing germinable grains with water in a proportion of approximately 1 : 1 by weight, followed by a germination process at a temperature of between 40° C and 60° C for a period of at least 36 hours, during which the relative proportions of grains and water by weight are kept substantially constant by the addition of water, and by a comminution followed by a pressure treatment by means of steam and an excess pressure of 0.1 to 5 bars for a period of at least 15 hours.

2. A process according to claim 1, characterised in that the germination process is carried out at about 50° C.

3. A process according to claim 1 or 2, characterised in that the duration of the germination process is at least 48 hours.

4. A process according to any one of the preceding claims, characterised in that before the start of the pressure treatment there has been added to the germinated grains about 0.1% by weight of citric acid, or a corresponding quantity of leaven, based on the dry mass of the grains.

5. A process according to any one of the preceding claims, characterised in that waste bread is added to the grains before the germination process.

6. A process according to any one of the preceding claims, characterised in that the dough additive constitutes a proportion of 10 to 15% by weight of the bread dough.

**Revendications**

1. Procédé de fabrication de pain complet en utilisant un complément de pâte décomposé enzymatiquement, caractérisé par le fait que l'on introduit, comme complément de pâte, un complément qui a été obtenu par mélange de graines de céréales pouvant germer, avec de l'eau en rapport en poids d'environ 1/1, un processus de germination suivant, à une température comprise entre 40 degrés C et 60 degrés C, pour une durée d'au moins 36 heures, durant lequel le rapport en poids entre les graines de céréales et l'eau est maintenu sensiblement constant, par addition d'eau et un traitement sous pression s'associant à un broyage, au moyen de vapeur d'eau et une pression effective de 0,1 à 5 bar pendant une durée d'au moins 15 heures.

2. Procédé selon la revendication 1, caractérisé par le fait que le processus de germination est effectué à environ 50 degrés C.

3. Procédé selon la revendication 1 ou 2, caractérisé par le fait que la durée du processus de germination s'est élevé à au moins 48 heures.

4. Procédé selon l'une des revendications précédentes, caractérisé par le fait qu'aux graines de céréales germées, on a ajouté, avant le début du traitement sous pression, environ 0,1 % en poids d'acide citrique ou une quantité correspondante de levain, rapportées à la masse sèche des graines de céréales.

5. Procédé selon l'une des revendications précédentes, caractérisé par le fait qu'est ajouté aux graines de céréales, avant le processus de germination, du pain résiduel.

6. Procédé selon l'une des revendications précédentes, caractérisé par le fait que le complément de pâte représente une proportion de 10 à 15 % en poids de la pâte du pain.